(19) Europäisches Patentamt
European Patent Office
Office européen des brevets

(11) Numéro de publication : **0 038 764**
**B1**

(12) **FASCICULE DE BREVET EUROPÉEN**

(45) Date de publication du fascicule du brevet : **30.07.86**

(51) Int. Cl.⁴ : **B 01 J 39/12**, C 08 F 8/40, C 22 B 60/02, C 22 B 3/00

(21) Numéro de dépôt : **81400633.4**

(22) Date de dépôt : **21.04.81**

# (54) Applications à l'échange de cathions de dérivés diphosphoniques, nouveaux dérivés diphosphoniques et leur procédé de fabrication.

(30) Priorité : **21.04.80 FR 8008963**

(43) Date de publication de la demande : **28.10.81 Bulletin 81/43**

(45) Mention de la délivrance du brevet : **30.07.86 Bulletin 86/31**

(84) Etats contractants désignés : **AT BE CH DE FR GB IT LI LU NL SE**

(56) Documents cités :
**EP-A- 0 001 561**
**EP-A- 0 023 173**
**FR-A- 2 322 100**
**US-A- 3 214 454**
**US-A- 3 297 578**
**US-A- 3 303 139**
**US-A- 3 890 228**
**US-A- 4 002 564**
**CHEMICAL ABSTRACTS, vol. 88, 1978, page 28, ref. 51530x Columbus, Ohio, US**
**CHEMICAL ABSTRACTS, vol. 72, 1970 page 273, ref.: 16025j Columbus, Ohio, US Y. UTSUNOMIYA et al.: "Preparation of phosphonic acid cation-exchange resin and its properties"**

(73) Titulaire : **MINEMET RECHERCHE**
**1, avenue Albert Einstein**
**F-78190 Trappes (FR)**

**S.N.P.E.**
**12, quai Henri IV**
**F-75181 Paris Cédex 04 (FR)**

(72) Inventeur : **Blanquet, Pierre**
**41, rue Montorgueil**
**F-78120 Rambouillet (FR)**
Inventeur : **Ricalens, François**
**4, square Alain Fournier**
**F-75014 Paris (FR)**

(74) Mandataire : **Ricalens, François et al**
**MINEMET RECHERCHE B.P. 106 1, avenue Albert Einstein**
**F-78191 Trappes Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**EP 0 038 764 B1**

Jouve, 18, rue St-Denis, 75001 Paris, France

**Description**

La présente invention a pour objet l'application de dérivés diphosphoniques à l'échange de cations, de nouveaux dérivés diphosphoniques et leur procédé de fabrication.

Au cours des dernières années, la récupération des ions métalliques et l'épuration des solutions aqueuses ont fait de plus en plus appel aux échangeurs d'ions sous forme de résines ou sous forme d'agents d'extraction liquide-liquide.

Il existe d'ores et déjà sur le marché de nombreuses compositions extractrices, notamment celles décrites dans le brevet français n° 2.322.100. Toutefois ces compositions ne permettent pas d'échanger certains cations métalliques lorsque ces derniers sont dissous dans des solutions aqueuses très acides et/ou fortement complexantes.

Certains de ces composés étaient déjà connues de l'homme de métier par les brevets des Etats-Unis n° US-A-3.214.454 et US-A-3.303.139. Dans ces brevets, ces composés sont utilisés en tant qu'agent séquestrant.

Bien que les techniques et les dérivés décrits dans le brevet européen n° 23.173 publié le dépôt de la présente demande ait constitué un progrès, un des problèmes les plus délicats à traiter reste la récupération des actinides et de certaines terres rares contenues dans des solutions d'acide phosphorique et plus particulièrement la récupération de l'uranium contenu dans les solutions d'acide phosphirique brut dont la teneur en $P_2O_5$ varie de 10 à 50 % en poids.

C'est pourquoi l'un des buts de la présente invention est de fournir une composition extractrice susceptible d'extraire certains cations métalliques présents dans certains milieux complexants ou très acides.

Un autre but est de fournir une composition du type précédent susceptible d'extraire l'uranium dans de l'acide phosphorique à une teneur en $P_2O_5$ variant de 10 à 50 %.

Un autre but enfin est de fournir un procédé de récupération de l'uranium par échange de cations dans le milieu phosphorique ci-dessus en faisant appel auxdites compositions, la température pouvant varier de la température ambiante à 70-80 °C.

Ces buts sont atteints au moyen de composition échangeuse d'ions de métaux choisis dans le groupe constitué par les actinides, les lanthanides, l'yttrium, les éléments de transitions tri- ou tétravalent, le plomb, le zinc, le cuivre, le nickel, le cobalt, le chrome, l'antimoine, le gallium, le vanadium, le cadmium, l'indium, le molybdène, le thallium, le mercure, le bismuth et le germanium, caractérisée par le fait qu'elle contient au moins un dérivé diphosphonique dont la forme acide est représentée par la formule générale G suivante :

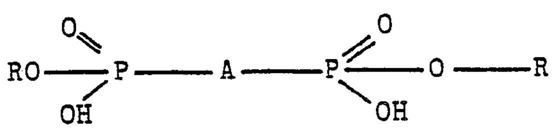

où R est choisi dans le groupe constitué par les restes alcoyles comportant 1 à 12 atomes de carbone et au plus 2 ramifications sur la chaîne principale et par l'hydrogène, et où A est un radical organique divalent comportant au moins 8 atomes de carbone choisi dans le groupe des éthylènes mono, di ou tri-substitués et des méthylènes mono ou di-substitués ; par le fait que le nombre total d'atomes de carbone est compris entre 10 et 50 ; et par le fait que ledit dérivé répondant à la formule G est dissous dans un diluant hydrocarboné et un composé polaire lipophile non miscible à l'eau choisi dans le groupe constitué par les alcools, les cétones, les triesters de l'acide phosphoriques, les sulfones, les sulfoxydes, les dérivés halogénés, les oxydes de trialcoyl-phosphine et les acides carboxyliques à longue chaîne, à une concentration comprise entre 0,01 et 0,2 M.

Parmi les groupements diphosphoniques actifs, il convient de signaler un groupement qui a le mérite d'avoir d'excellentes capacités extractrices tout en étant facile d'accès. Il s'agit du groupement hydroxy-méthylène diphosphonique.

Un autre groupement également facile d'accès est le groupement amino-méthylène diphosphonique.

Toutefois, quoiqu'il soit plus difficile à synthétiser, le groupement méthylène diphosphonique semble être celui qui présente la meilleure stabilité chimique avec d'excellentes caractéristiques d'extraction.

Les dérivés selon la présente invention sont éventuellement dilués dans un diluant hydrocarboné choisi dans le groupe des hydrocarbures saturés ou insaturés, aliphatiques et aromatiques, ou leurs mélanges.

Le nombre total d'atomes de carbone de ces dérivés est de préférence entre 15 et 40, le domaine le plus satisfaisant étant entre 18 et 30.

Comme cela ressort des exemples, les propriétés extractrices de ces dérivés peuvent varier sensiblement suivant les caractéristiques des chaînes hydrocarbonées A ou R. Ainsi une chaîne fortement ramifiée et/ou comportant des composés cyclaniques ou bicyclaniques confère aux composés issus de la synthèse une lipophilicité bien inférieure à celle donnée par les chaînes linéaires ayant le même nombre

de carbones. Toutefois on ne s'écartera pas de l'invention en considérant que lorsqu'il y a un cyclane dans une chaîne, la chaîne est équivalente à une chaîne linéaire ou le cyclane est compté pour la moitié des carbones qu'il contient.

On peut comparer les composés hydroxy-diphosphonés obtenus par l'action, décrite ci-après, du trichlorure de phosphore sur l'acide naphténique ayant en principe 23 atomes de carbone et très ramifié d'une part, et sur les produits issus du résidu de papeterie connu sous le nom d'origine scandinave « Tallol » et qui est un mélange des acides oléique et linoléique, acides dont les chaînes linéaires ont 18 atomes de carbone et qui présentent respectivement une et deux insaturations d'autre part. Dans le premier cas la solubilité du dérivé diphosphonique dans l'eau est très élevée, ce qui rend son emploi très coûteux. Dans le deuxième cas la solubilité dans la phase aqueuse est extrêmement faible, inférieure à 1/3 000ème. La diestérification symétrique, ou disymétrique, joue un double rôle très important ; elle diminue considérablement la solubilité dans l'eau des acides ainsi obtenus et elle entraîne un accroissement très important de la sélectivité de l'extraction de l'uranium par rapport au fer dans les milieux phosphoriques.

Compte tenu de ce qui précède et des données économiques, on peut donner une définition d'un produit de synthèse peu coûteuse et présentant d'excellentes qualités d'extraction. Un tel produit est dérivé d'un acide gras à chaîne linéaire et ayant subi une diphosphonation à l'aide du trichlorure de phosphore et ayant subi une diestérification. Le produit ainsi obtenu doit présenter un radical A ayant au moins 8 atomes de carbone et de préférence entre 15 et 25 et présentant au plus deux ramifications et de préférence aucune, le radical R ayant de 1 à 15 atomes de carbone, de préférence de 8 à 12, et présentant au plus deux ramifications.

Ces produits présentent l'avantage remarquable que ne présentait aucun autre produit pour l'extraction de l'uranium à l'état d'oxydation IV contenu dans l'acide phosphorique, d'être insolubles en milieu basique, ce qui permet une réextraction à l'aide de solutions de carbonate alcalin ou d'ammonium et d'un oxydant permettant le passage de l'uranium de la valence IV à la valence VI.

Les composés selon l'invention peuvent également être des résines échangeuses d'ions dont les groupements actifs répondent à la formule G.

La présente invention a également pour but de fournir un nouveau dérivé diphosphonique de formule G', caractérisé par le fait qu'il répond à la formule générale G où le groupement A comporte au moins 8 atomes de carbone et répond à la formule :

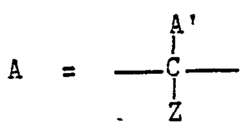

où R est choisi dans le groupe constitué par l'atome d'hydrogène et les restes hydrocarbyles de 1 à 15 atomes de carbone ;
où A' est choisi dans le groupe constitué par les radicaux hydrocarbyles ayant de 1 à 30 atomes de carbones et au plus deux ramifications, par les chaînes latérales d'une résine comportant d'autres chaînes latérales porteuses de groupes du type G' et ayant un taux de phosphore d'au moins 5 % ;
où Z est choisi dans le groupe constitué par les radicaux hydrocarbyles ayant de 1 à 30 atomes de carbones et au plus deux ramifications, par les groupements aminés ($NH_2$ non-, mono- ou di-substitués), par les groupements alcools (OH non- ou substitués) et par l'atome d'hydrogène ; que le nombre total de carbones desdits dérivés est compris entre 10 et 50 ;
et que, lorsque Z est hydrophile et que les groupements acide phosphonique ne sont pas estérifiés, le groupement A' comporte au moins 14 atomes de carbone.

Le radical R de la formule G a de préférence de 8 à 12 atomes de carbones et présente au plus deux ramifications.

Le nombre total d'atomes de carbone est avantageusement compris entre 10 et 50, de préférence entre 15 et 40, le domaine le plus satisfaisant étant entre 18 et 30.

Par rapport aux dérivés connus du phosphore susceptibles d'extraire l'uranium, tel l'OPPA, les dérivés selon l'invention présentent l'originalité de voir leur caractère lipophile lié à la longueur d'une chaîne rattachée directement au phosphore par des liaisons carbone-phosphore et située entre les deux atomes de phosphore. C'est pourquoi les contraintes au niveau du groupement A sont les plus strictes c'est-à-dire qu'ils doivent avantageusement avoir au moins 8 atomes de carbone et de préférence entre 15 et 25. Ces dérivés ont en outre l'avantage de présenter une grande stabilité vis-à-vis des réactifs acides notamment l'acide fluorhydrique.

Enfin, il convient de signaler que lorsque Z est hydrophile, c'est-à-dire lorsqu'il est amino ou hydroxyle et lorsque ceci n'est pas compensé par une perte d'hydrophilicité par estérification partielle des groupements acide phosphonique, pour obtenir une lipophilicité satisfaisante il est nécessaire que le groupement A' ait au moins 14 atomes de carbone.

En ce qui concerne les dérivés nouveaux que constituent les résines échangeuses d'ions selon l'invention, ils sont de préférence caractérisés par le fait que fait que leur groupement actif est un

groupement diphosphonique dont la forme acide est représentée par la formule générale G suivante :

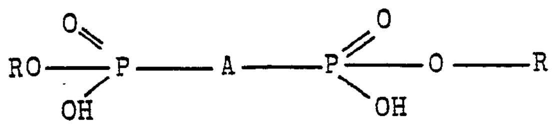

où R est choisi dans le groupe constitué par les restes alcoyles comportant 1 à 12 atomes de carbone et au plus 2 ramifications sur la chaîne principale et par l'hydrogène ;
où A est un radical organique divalent choisi dans le groupe des éthylènes mono, di ou tri-substitués et des méthylènes mono ou di-substitués, un des substituants étant la chaîne raccordant ledit groupement diphosphonique au squelette de la résine.

Les résines sont choisies dans le groupe constitué par les résines acryliques et les polystyrènes réticulés.

De préférence le taux de phosphore en poids de la résine est compris entre 10 et 25 %.

Comme il l'a été mentionné plus haut, la formule G' est également préférée.

Un but supplémentaire de l'invention est de lui fournir un procédé de synthèse des nouveaux dérivés selon l'invention.

La synthèse des dérivés ci-dessus de formule G qui sont liposolubles et qui donc peuvent être qualifiés de micro-molécules, peut être réalisée en faisant appel à des réactions bien connues en phase unique homogène du spécialiste de chimie du phosphore. Ces réactions sont exposées ci-dessous par les équations suivantes où les radicaux R, R' et R'' sont différents de ceux qui sont exposés dans la formule G et où X a la signification d'un atome d'halogène :

$$R{-}COOH + PCl_3 \xrightarrow{H_2O} R{-}C\ (OH)\ (PO_3H_2)_2$$

$$R{-}C \equiv \text{à } N + PCl_3 \xrightarrow{H_2O} R{-}C\ (NH_2)\ (PO_3H_2)_2$$

$$CH_2{-}(PO)\ OR')_2 \xrightarrow[2)\ R{-}X]{1)\ Na} R{-}CH{-}(PO_3H_2)_2$$

3) HCl à 60 °C

$$R{-}CHX{-}CHX\ R' + NaPO_3R''_2 \longrightarrow$$

$$R{-}CH(PO_3HR''){-}CH\ (PO_3HR''){-}R' + NaX$$

La stœchiométrie de ces réactions n'est pas respectée.

Il est à noter que des polymères hydrosolubles présentant des groupements hydroxy-diphosphonés ainsi que leur procédé de synthèse ont été décrits dans le brevet européen n° 1.561.

En ce qui concerne l'estérification des solvants diphosphonés, elle peut être effectuée par l'action de l'orthoformiate d'alcoyle correspondant suivant un mode opératoire identique à celui suivi pour l'estérification des acides carboxyliques.

Tous les dérivés liposolubles selon la présente invention ont été réalisés suivant les techniques exposées ci-dessus.

Lorsque les dérivés diphosphoniques sont des résines, la méthode de synthèse préférée consiste à greffer des groupes diphosphoniques sur une résine porteuse de fonctions acide carboxylique, connue en soi.

Une autre méthode consiste à préparer des monomères diphosphoniques, à les polymériser et à réticuler le polymère obtenu pour le transformer en une résine.

Lorsqu'on utilise la méthode de greffage, on peut soit utiliser les réactions indiquées précédemment simplement transposées au cas des résines, soit mettre en œuvre un procédé spécialement conçu en vue de préparer des résines suivant l'invention. Dans le premier cas, on obtient généralement des résines faiblement chargées en phosphore dans le second cas, on obtient des résines dont le taux de phosphore en poids est considérable, généralement compris entre 10 et 25 %, ce qui conduit à des dérivés disphosphoniques particulièrement performants vis-à-vis de l'échange de cations.

L'invention concerne donc également, un procédé de synthèse de résines diphosphoniques à taux de phosphore en poids compris entre 10 et 25 % en poids.

Ce procédé présente trois aspects essentiels. Le premier concerne le degré de siccité de la résine de départ. Il est à cet égard primordial de sécher la résine de manière approfondie : un entraînement azéotropique de l'humidité au benzène est une méthode suffisante. Une méthode plus performante encore ou un traitement complémentaire de dessiccation sont avantageux quoique non indispensables. Le

second aspect important du procédé est la nature du solvant utilisé. Le solvant doit être inerte, permettre une réaction ultérieure en milieu homogène et présenter de préférence des ponts éther. La polarité du solvant n'est pas un point crucial.

Toutefois, l'utilisation d'un solvant dont la constante diélectrique est comprise entre 2 et 10 à 25 °C est avantageuse. De même on préfère les solvants dont le point d'ébullition est supérieur à la température de réaction située entre 90 et 140 °C. Les solvants à point d'ébullition plus faible sont néanmoins utilisables, quitte à opérer la réaction sous pression. Enfin, le troisième aspect important du procédé est la température utilisée : on opère de préférence entre 90 et 120 °C, sans dépasser 140 °C environ. On a constaté, en effet, qu'en dépit de la fragilité thermique des résines du type à terminaisons carboxyliques, l'emploi de ces températures est un paramètre très favorable non seulement du point de la cinétique, mais aussi du point de vue du taux de substitution. La capacité des résines à subir plusieurs cycles dans les conditions précitées apparaît également comme étonnante et est attribuée à la sélection des conditions précises effectuées.

On peut ainsi modifier toute résine comportant des groupements carboxyliques telle que des résines acryliques ou des résines à groupes imino-diacétiques dérivés de polystyrène réticulés.

Un bon exemple de procédé de synthèse de résine échangeuse d'ions est caractérisé par le fait qu'il comprend les étapes suivantes :

(1) on acidifie une résine portant des groupes acides carboxyliques à l'aide d'un acide minéral ;

(2) on rince la résine acidifiée afin d'éliminer les traces d'acide minéral ;

(3) on amène la résine à un degré de siccité au moins égal à celui obtenu par entraînement azéotropique au benzène ;

(4) on fait gonfler la résine séchée à l'aide d'un solvant inerte comportant de préférence au moins un pont éther et capable de dissoudre au moins 3 % de son volume d'eau et au moins 8 % de son volume de trichlorure de phosphore ;

(5) on ajoute à la résine gonflée entre 5 et 50 % de son volume d'eau et de trichlorure de phosphore, à raison de 1 à 2,5 mole d'eau par mole de trichlorure de phosphore ;

(6) on porte la température entre 90 et 140 °C pendant 0,5 à 10 heures ;

(7) on réitère les opérations (5) et (6) au moins une fois et de préférence au moins deux fois, en abaissant éventuellement la température entre 20 et 80 °C avant chaque nouvelle introduction ;

(8) on rince à l'eau et on sèche la résine ;

(9) on estérifie éventuellement la résine, de manière connue en soi.

Un autre but de la présente invention est de fournir des compositions nouvelles susceptibles de permettre l'extraction par solvants de différents cations métalliques.

En effet, les dérivés liposolubles selon l'invention sont difficiles à dissoudre dans les diluants hydrocarbonés classiquement utilisés dans l'industrie et notamment ceux qui permettent une utilisation jusqu'à 60-80 °C et ne se dissolvent bien que dans certains carbures aromatiques, tel le toluène, dont la toxicité est importante et/ou dans des diluants polaires relativement inflammables comme l'éther et différents esters carboxyliques.

C'est la raison pour laquelle, au cours de l'étude qui a menée à la présente recherche, on a cherché à mettre au point des diluants susceptibles de dissoudre ces composés dont le principal constituant est un hydrocarbure non aromatique.

C'est ainsi qu'il a pu être montré que l'addition dans des proportions variant de 1 à 20 % d'un composé lipophile polaire non miscible à l'eau permettait de dissoudre de manière satisfaisante les composés selon la présente invention.

Ces composés polaires lipophiles et non miscibles à l'eau peuvent notamment être des alcools, des cétones, des triesters de l'acide phosphorique, des sulfones, des sulfoxydes, des dérivés halogénés, des oxydes de trialcoyl-phosphine. Ils peuvent être aussi des acides carboxyliques à longue chaîne tels que ceux qui subissent l'hydroxydiphosphonation pour obtenir un des dérivés selon l'invention.

Toutefois, il est plus pratique d'utiliser des alcools primaires, secondaires ou tertiaires dont le nombre de carbone est compris entre 5 et 12 et de préférence entre 6 et 10.

L'Octanol-2, plus souvent appelé alcool caprylique, et le dodécanol conviennent parfaitement et ce dans des proportions comprises entre 2 et 20 %, de préférence entre 3 et 10 %.

Il convient ici de signaler que ces composés polaires lipophiles non miscibles à l'eau ne sont pas sans influence sur le comportement des dérivés selon l'invention et leur puissance extractrice a tendance à diminuer quand la concentration en ledit composé polaire augmente, la sélectivité respective entre les divers cations varie également. Dans le cas de l'extraction de l'uranium par solvant, lesdits composés entraînent également une extraction de l'acide phosphorique surtout lorsque ce dernier est très concentré.

C'est la raison pour laquelle les compositions selon la présente invention sont constituées par des solutions de 0,01 M à 0,2 M d'un dérivé répondant à la formule G dissous dans un diluant hydrocarboné, de préférence non aromatique, et dans un composé polaire lipophile non miscible à l'eau choisi dans le groupe constitué par les alcools, les cétones, les triesters de l'acide phosphorique, les sulfones, les sulfoxydes, les dérivés halogénés, les oxydes de trialcoyl-phosphine et les acides carboxyliques à longue chaîne (7 à 30 atomes de carbone, de préférence de 15 à 25).

On peut choisir les diluants hydrocarbonés parmi ceux vendus industriellement par les sociétés

pétrolières. On peut citer notamment le produit vendu par la société « ESSO » sous le nom « EXSOL D 100 » ou ESCAID 120.

En ce qui concerne le procédé de récupération de l'uranium présent dans l'acide phosphorique, dans le cas d'emploi des solvants, il suffit d'utiliser les techniques de mise en contact mises au point dans le cas bien connu de l'acide octyl-pyrophosphorique, plus connu sous son sigle d'OPPA, l'élution étant alors réalisée par mise en contact avec de l'acide fluorhydrique.

Toutefois les techniques d'extraction sont beaucoup plus aisées dans le cas de l'utilisation des extractants suivant la présente invention et notamment dans le cas des composés diestérifiés selon l'invention. On observe en effet, même en présence d'assez fortes concentrations de fer ferrique, très peu d'émulsions.

En outre, ces composés sont susceptibles d'extraire l'uranium même à de très fortes concentrations de $P_2O_5$ telles que celui commercialisé au titre de 50 % en poids.

En ce qui concerne la réextraction, il est possible de réextraire à l'aide de solutions sulfuriques de sulfate de fer. Toutefois la cinétique de ces réextractions est lente. Dans le cas des composés diestérifiés il est en revanche possible de réextraire l'uranium à l'aide de solutions de carbonates de sodium et/ou d'ammonium et d'un oxydant susceptible d'oxyder l'uranium IV dans le solvant en uranium VI. Ledit oxydant peut être l'eau oxygénée. La concentration en carbonate de sodium peut varier entre 0,5 et la limite de solubilité de ce carbonate. Pour les autres carbonates alcalins ou d'ammonium les mêmes limites sont applicables.

En ce qui concerne les techniques de réextraction basiques et les solutions susceptibles de réextraire l'uranium contenu, on peut faire appel aux techniques décrites et/ou citées dans les demandes de brevets français déposées par MINEMET RECHERCHE sous les numéros 2 423 545, 2 435 444, 2 449 728 et 2 449 652.

Dans le cas d'emploi des résines, on met en contact la résine avec l'acide phosphorique uranifère, chimiquement réduit ou non, puis on élue en milieu oxydant à l'aide de solutions de carbonate alcalin ou d'ammonium, de 10 à 200 grammes par litre.

Toutefois une telle réextraction, sans doute à cause de la présence d'eau oxygénée, a une tendance à altérer la résine et à réduire la quantité de groupements actifs au sein de cette résine. C'est la raison pour laquelle il est préférable d'utiliser d'autres techniques qui en outre présentent l'avantage de ne pas avoir à neutraliser l'acidité imprégnante de l'acide phosphorique. Ainsi on a pu montrer que l'on pouvait éluer les résines à l'aide de solutions de sulfate ferrique concentré en présence d'un peu d'acide sulfurique (0,1 N à 1 N) pour éviter la précipitation de ce sel.

Les produits selon l'invention, résines ou solvants, présentent d'excellentes qualités extractrices pour de nombreux métaux et pour lesquels peu d'extractants étaient connus en milieu acide. Parmi les cations aisément extraits on peut citer l'ensemble des métaux présentant une sous-couche f ainsi que l'yttrium et par conséquent les lanthanides et les actinides. Ils présentent une capacité relativement élevée pour les alcalino-terreux et pour différents éléments de transition tri- ou tétravalents. En particulier le plomb est extrait sélectivement par rapport au zinc et au cuivre, ces deux derniers éléments étant extraits eux aussi mais à des acidités moins importantes.

Les dérivés selon l'invention extraient aussi l'uranium sous sa forme VI, bien que ses coefficients de partage soient, pour les solvants en tout cas, moins favorables que pour l'uranium IV. En revanche, en ce qui concerne les résines selon l'invention, la fixation de l'uranium VI est excellente puisqu'il est possible de fixer des quantités non négligeables d'uranium VI en présence d'un très fort excès de fer ferrique. Ce phénomène pourrait être dû au fait que les ions métalliques dans la résine ne peuvent être ligandés qu'une fois, à l'extrême rigueur deux fois, tandis qu'en phase liquide les cations peuvent être aussi ligandés que nécessaire.

A titre purement indicatif l'uranium IV semble lié dans les phénomènes d'extraction mettant en jeu les produits liposolubles di-estérifiés selon l'invention à deux molécules d'agent d'extraction. En d'autres termes il peut être considéré comme diligandé alors que le fer III formerait un complexe mettant en jeu deux ions ferriques et trois molécules d'agent d'extraction.

Les exemples qui suivent et qui ne présentent aucun caractère limitatif ont pour but de mettre les spécialistes à même de déterminer aisément les conditions opératoires qu'il convient d'utiliser dans chaque cas particulier.

## Exemple 1

Préparation d'acide alcoyl-méthylène-diphosphonique

I - Préparation du dérivé sodé de l'ester (1a)

On opère sur des quantités équimoléculaires d'ester et de sodium.

$$Na + H_2C\ P(O)\ (OCH(CH_3)_2)_2)_2 \qquad Na\ CH\ P(O)\ (OCH(CH_3)_2)_2)_2$$

Dans un ballon, muni d'un thermomètre, d'un agitateur métallique entraîné par un moteur électrique,

d'une ampoule à brome et d'un réfrigérant, on disperse 1,6 g de Na dans 15 ml de toluène anhydre chauffé à reflux, sous une vigoureuse agitation. On refroidit ensuite à 20° et on ajoute, par l'ampoule, 24,3 g de méthylène-disphosphonate d'isopropyle, 1a, en maintenant le mélange réactionnel entre 20 et 30° au moyen d'un bain d'acétone-carboglace jusqu'à disparition totale du sodium.

II - Alkylation du dérivé sodé. Préparation du benzyl-méthylène-disphophonate d'isopropyle, 1b

On ajoute, in situ, au dérivé sodé en solution dans le toluène, chauffé à 100°, 11 ml de bromure de benzyle. On continue à chauffer à 60° pendant une heure. On évapore ensuite le toluène sous le vide de la trompe à eau. On ajoute 50 ml d'hexane technique et 50 ml d'eau. On transvase ce mélange dans une ampoule à décanter. On sépare la phase organique dans l'hexane de la phase aqueuse par des portions de 50 ml d'hexane. La phase hexanique est ensuite lavée à l'eau jusqu'à disparition de traces de dérivés bromés dans les eaux de lavage (test au $NO_3Ag$). On sèche la phase organique sur sulfate de sodium anhydre. Puis on évapore le solvant sous vide.

La distillation du produit brut permet de recueillir 14,6 g d'ester 1b attendu. Le résidu contenu dans le ballon (3,4 g) est composé d'un mélange d'acides benzyl-méthylène-diphosphonique (diacides et triacides). Rendement de l'alkylation de l'ester 1b = 60 %. La formation des acides benzyl-disphosphoniques peut s'expliquer par l'hydrolyse de l'ester 1b au cours des extractions et des lavages de la phase organique.

III - Hydrolyse de l'ester 1b. Préparation de l'acide benzyl-méthylène-diphosphonique, 2b

```
CH - (P(O) (OCH(CH3)2)2)2   H+   CH - (P(O)(OH)2)2
|                           →    |
CH2                              CH2
|                                |
C6H5                             C6H5
```

1,5 g d'ester 1b et 11 ml d'acide chlorhydrique concentré sont chauffés à reflux pendant 3 heures. On évapore ensuite sous vide l'acide et l'eau et on ajoute à la masse pâteuse 15 ml d'alcool isopropylique et on distille sous vide pour entraîner l'eau acide. L'opération est répétée 3 fois. On finit par sécher les cristaux dans un dessiccateur sous vide. Le rendement en acide est quantitatif.

La méthode mise au point pour la synthèse de l'ester 1b, du dérivé sodé de l'ester 1a et de l'acide 2b a été appliquée avec succès pour la synthèse des esters heptyl, dodécyl, hexadécyl, méthylène-diphosphonique ainsi que acides correspondants.

En ce qui concerne l'ester dialcoyle,

```
C7H15
|
C - (P(O) (OCH - (CH3)2)2)2
|
C7H15
```

nous l'avons obtenu aisément à partir du dérivé sodé de l'ester monoheptylique. La dialcoylation est obtenue avec un rendement de 27 %.

L'hydrolyse des esters isopropyliques des acides diphosphoniques en acides correspondants se fait avec de bons rendements et facilement ; c'est la raison pour laquelle nous les avons choisis.

La méthode analytique utilisée pour suivre ces synthèses a été la spectrographie RMN du proton. Les spectres de routine ont été enregistrés sur un appareil Varian E.M. 360 V, à partir des solutions dans le tétrachlorure de carbone avec le T.M.S. comme référence interne.

Les signaux caractéristiques pour les esters 5 sont :

$$CH_2\text{—}(P(O)\ (OCH\text{—}(CH_3)_2)_2)_2$$

$CH_2$—2,1 ppm (triplet)
CH—$(CH_3)_2$—4,7 ppm (7 raies dédoublées)
$CH_3$—CH—1,2 ppm (doublet J = 8 Hz)

$$CH_2\text{—}(P(O)\ (OCH\text{—}(CH_3)_2)_2)_2$$

$C_6H_5$—7,2 ppm
CH—$(CH_3)_2$—4,7 ppm (7 raies dédoublées)
$CH_3$—1,3 ppm

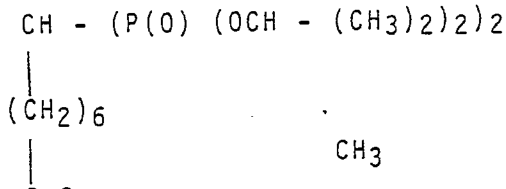

$CH_3$ - $(CH_2)_6$ - 0,9 ppm

CH—$(CH_3)_2$—4,65 ppm (7 raies dédoublées)
($CH_3$—CH—1,3 ppm (doublet J = 6 Hz)

et

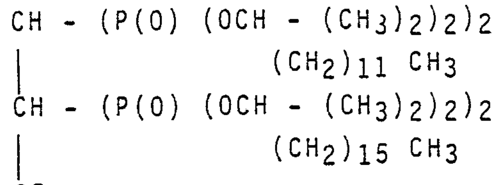

$CH_3$ $(CH_2)_n$ - 0,85 ppm

CH—$(CH_3)_2$—4,7 ppm (7 raies dédoublées)
$(CH_3)$—CH—1,3 ppm (doublet J = 8 Hz)

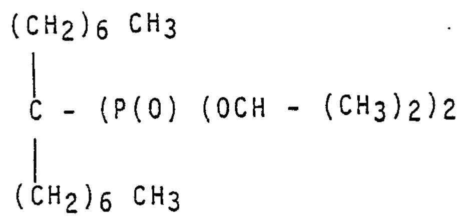

$CH_3$—$(CH_2)_6$—0,9 ppm
CH—$(CH_3)_2$—4,75 ppm (multiplet)
$(CH_3)_2$—CH—1,3 ppm (doublet)

En ce qui concerne les acides méthylène-disphosphoniques, on constate en RMN la disparition des protons isopropyliques à 1,3 ppm doublet du méthyle et à 4,7 ppm massif du CH—CH et l'apparition des signaux à bas champs dus aux protons acides — ce qui permet de contrôler l'hydrolyse partielle ou totale.

Exemple 3

Hydroxy-phosphonisation de l'acide vendu par la Société SHELL sous le nom d'acide naphténique

Sept molécules d'acide naphténique pour deux molécules de chlorure de phosphore ($PCl_3$) sont mises en réaction selon les techniques décrites dans le brevet belge 619 620. Le produit réactionnel est ensuite dilué à 30 % dans du kérosène puis le mélange ainsi obtenu est mis en contact avec une solution d'acide phosphorique à 30 % de $P_2O_5$ contenant 100 mg/litre d'uranium. La plus grande partie de l'uranium est extraite que la solution soit réduite ou non.

Exemple 4

Essai de diphosphonation du produit connu sous la dénomination « Tallol »

On procède comme dans l'exemple précédent.

Exemple 5

Diestérification des produits obtenus suivant les exemples 3 et 4.

Ces produits sont mélangés avec un très large excès (2 fois la quantité stœchiométrique) d'orthoformiate d'éthyle ou de méthyle suivant l'ester que l'on désire faire. Au cours de cette opération deux fonctions des acides hydroxy-diphosphoniques et la fonction acide du tallol ou de l'acide naphténique sont estérifiées. On procède suivant les techniques classiques en chimie organique pour l'estérification à l'aide d'orthoformiate d'alcoyle. Une fois la réaction faite, on évapore les solvants à l'aide d'un appareil communément appelé « rotavapor », puis en tirant sous vide à l'aide d'une pompe à palet. Comme les études de résonance magnétique nucléaire le montrent, le culot est constitué de produits hydroxy-diphosphoniques diestérifiés pratiquement purs.

On a préparé ainsi le dérivé méthylé de l'acide naphténique et éthylé du produit provenant du Tallol.

## Exemple 6

Hydroxy-diphosphonisation de la résine vendue sous le nom commercial C 464 DIAPROSIM.

On a cherché à se débarrasser de l'excès d'eau contenue dans la résine soit en la pré-traitant par le dioxane anhydre, soit en utilisant un excès important de $PCl_3$.

Mode opératoire :

— Résine : 5 ml
— Dioxane anhydre : 50 ml
— Chauffage 30 minutes vers 100 °C.
— Filtration sur fritté, à chaud. Séchage par maintien de l'aspiration pendant 5 minutes.
— Transfert du produit sec en tube à essai. Addition de :
  Dioxane : 2 ml
  $PCl_3$ : 0,9 ml
— Chauffage au bain d'eau bouillante pendant 2 heures.
— Reprise par $H_2O$, filtration, lavage, séchage.

Plusieurs échantillons de résine ont été traités de cette façon et les résines obtenues ont été mises au contact avec des solutions d'acide phosphorique à 30 % contenant 100 mg d'uranium sous forme réduite (90 % du fer sous forme $Fe^{2+}$). Ramenée à une concentration par kilo de résine de une mole de groupement hydroxy-méthylène-diphosphonique, la résine présente un coefficient de partage entre la phase résine et la phase aqueuse de 80 environ et la capacité en saturation de l'ordre de 70 g/kg de résine.

Par ailleurs, tous les composés décrits dans les exemples 1 et 2 ont été testés sur la même solution et tous ont présenté une activité extractrice de l'uranium très élevée.

D'autres tests ont mis en évidence la possibilité d'extraire outre l'uranium d'autres métaux divalents, notamment dans le groupement des actinides et des lanthanides.

## Exemple 7

Extraction par le dérivé obtenu dans l'exemple 3 d'éléments autres que l'uranium.

Composition des phases aqueuses et forme sous laquelle les éléments ont été introduits.

Les éléments sélectionnés sont répartis dans deux solutions à pH 1, $S_1$ et $S_2$ contenant environ 100 mg/l de chacun d'eux.

(Voir tableaux page 10)

| $S_1$ | $S_2$ |
|---|---|
| Pb ⟶ $PbCl_2$ | V ⟶ $V_2O_5$ |
| Zn ⟶ $ZnCl_2$ | Mo ⟶ $MoO_3$ |
| Cu ⟶ $CuCl_2$ | In ⟶ $InCl_3$ |
| Ni ⟶ $NiCl_2$ | Bi ⟶ $BiCl_3$ |
| Co ⟶ $CoCl_2$ | Sn ⟶ $SnCl_2$ |
| Cr ⟶ $CrCl_3$ | Tl ⟶ $TlCO_3$ |
| Sb ⟶ $SbCl_3$ | Ca ⟶ $CaCl_2$ |
| Ga ⟶ $GaCl_3$ | Cd ⟶ $CdCO_3$ |
| La ⟶ $LaCl_3$ | Hg ⟶ $HgCl_2$ |

| | $S_1$ initiale | $S_1$ après contact | $S_2$ initiale | $S_2$ après contact |
|---|---|---|---|---|
| Cu | 100 | 50 - 75 | 100 | 100 |
| Fe | ND | ND | | |
| Ga | 100 | ND | | |
| Zn | 100 | 100 | | |
| Co | 100 | 50 | | |
| Ni | 100 | 75 | | |
| Cr | 100 | 100 | 100 | ND |
| La | 100 | ND | | |
| V | | | 100 | 50 |
| Cd | | | 100 | 80 - 90 |
| In | | | 100 | ND |
| Mo | | | 100 | ND |
| Tl | | | 100 | 50 |
| Hg | | | 100 | 100 |
| Sn | | | ND | ND |
| Bi | | | TP | ND |
| Th | | | TP | ND |
| Ca | | | 100 | 90 - 100 |
| Sb | ND | ND | | |

TP = traces possibles ; ND = non décelé.

Composition de la phase organique

Dérivé diphosphonique 0,1 M dans Exsol D100 + octanol 5 % en volume.

Conditions et mode opératoire des essais

Les contacts phase organique et phase aqueuse sont effectués en ampoules à décanter avec :
— 0/A = 1/10
— Temps de contact : 10 mn
— Température ambiante.

Résultats

Les éléments sont dosés semi-quantitativement, par fluorescence X, dans les phases aqueuses avant et après contact avec la phase organique.

Le tableau ci-avant exprime la quantité d'élément présent en pourcentage par rapport aux solutions initiales (base 100 %).

Remarque : la phase organique vierge contiendrait des traces de cuivre et de fer (probablement des mg/l).

Exemple 8

Essai d'extraction de l'uranium en milieu phosphorique à l'aide de composés hydroxy-diphosphoniques issus de la réaction du trichlorure de phosphore sur le Tallol.

Des phases organiques contenant 0,1 mole par litre de réactif dissous dans le solvant vendu par ESSO sous la dénomination commerciale ESCAID 120, additionnées de 5 % d'Octanol, sont mises en contact avec des solutions d'uranium et de fer dissous dans de l'acide phosphorique à 30 % de $P_2O_5$. Le fer est introduit sous forme de sel de Mohr et l'uranium sous forme d'uranium IV dissous dans une solution 1 N d'acide sulfurique.

La durée du contact, choisie de 30 minutes, est très largement supérieure à celle nécessaire pour atteindre l'équilibre (5 minutes).

Dans ces expériences, on fait varier la concentration en uranium dans la phase aqueuse de départ.

Le premier tableau correspond au produit issu du Tallol sans modification et contenant en outre du Tallol résiduel (environ la même quantité exprimée en moles que celle du réactif hydroxy-diphosphoné) (cf exemple 4). Le deuxième tableau correspond au réactif obtenu à partir du Tallol et ayant subi une réaction d'estérification, ce qui conduit à un ester diéthylé de l'acide hydroxy-diphosphonique. Ce produit ne comporte que peu ou pas de Tallol résiduel. (cf exemple 5).

Tableau 1

| Phase aqueuse | | | Phase organique | | $K_d$ |
|---|---|---|---|---|---|
| FeII/Fe tot. (%) | U introduit (mg/l) | U équilibre (mg/l) | R | U équilibre (mg/l) | |
| 100 - | 20 | < 10 | L8 | 200 | > 20 |
| " | 500 | < 10 | " | 5000 | > 500 |
| " | 1000 | 260 | " | 7400 | 28 |
| 50 % | 100 | 50 | " | 500 | 10 |

Tableau 2

| Phase aqueuse | | | Phase organique | | $K_d$ |
|---|---|---|---|---|---|
| FeII/Fe tot. (%) | U introduit (mg/l) | U équilibre (mg/l) | R | U équilibre (mg/l) | |
| 100 - | 20 | < 10 | L9 | 200 | > 20 |
| " | 500 | < 10 | " | 5000 | > 500 |
| " | 750 | 75 | " | 6860 | 91 |
| " | 1000 | 180 | " | 8200 | 45 |
| " | 2000 | 1470 | " | 8440 | 6 |
| 50 % | 100 | 30 | " | 700 | 23 |

## Exemple 9

Etude de l'influence de l'Octanol et du taux de réduction sur l'extraction de l'uranium par le composé hydroxy-diphosphoné diestérisé issus de Tallol.

L'acide phosphorique utilisé est le même que celui décrit dans l'exemple précédent. Toutefois, le fer a été introduit sous forme de sel de Mohr et de sulfate ferrique et ce, de manière que la quantité de fer total dissous reste constante et de manière à obtenir le taux de réduction spécifié dans les tableaux suivants.

Le premier tableau correspond à l'utilisation d'un solvant contenant 0,1 M du composé diphosphonique diestérifié. Le deuxième tableau correspond à une concentration 0,05 M du même composé.

On a fait varier la teneur en Octanol de la phase organique.

Tableau 1

| FeII / Fe tot. % | Octanol % | Phase aqueuse $U_A$ (mg/l) | Phase organique | | | $K_dU$ | S U/Fe |
|---|---|---|---|---|---|---|---|
| | | | $U_O$ (mg/l) | $Fe_O$ (mg/l) | P (g/l) | | |
| 90 | 5 | 265 | 6530 | 680 | 7,19 | 24,6 | 54 |
| 80 | 5 | 325 | 5890 | 930 | 6,94 | 18,1 | 58 |
| 100 - | 15 | 205 | 6900 | 190 | 6,84 | 33,7 | - |
| 90 | 15 | 280 | 6250 | 500 | 6,84 | 22,3 | 67 |
| 80 | 15 | 315 | 5800 | 660 | 6,84 | 18,4 | 84 |

Tableau 2

| FeII / Fe tot. % | Octanol % | Phase aqueuse $U_A$ (mg/l) | Phase organique | | | $K_dU$ | S U/Fe |
|---|---|---|---|---|---|---|---|
| | | | $U_O$ (mg/l) | $Fe_O$ (mg/l) | P (g/l) | | |
| 90 | 5 | 160 | 2980 | 350 | 3,21 | 18,6 | 80 |
| 80 | 5 | 190 | 2680 | 450 | 3,21 | 14,1 | 94 |
| 100 - | 15 | 125 | 3390 | 110 | 3,49 | 27,1 | - |
| 90 | 15 | 165 | 3040 | 290 | 3,46 | 18,4 | 95 |
| 80 | 15 | 180 | 2740 | 381 | 3,51 | 15,2 | 120 |

$K_dU$ = coefficient de partage $U_O/U_A$
S U/Fe = coefficient de sélectivité de l'uranium par rapport au fer $U_A/FeA/U_O/Fe_O$.

## Exemple 10

Essai de solubilité des solvants issus du Tallol.

Les phases organiques contenant 0,1 M des dérivés issus du Tallol, diéthylés ou non, modifiées ont été mises en contact avec des phases aqueuses constituées par de l'acide phosphorique à 30 %, le rapport des deux phases étant égal à 1.

Les résultats pour les deux solvants montrent une perte inférieure à 1/3000ème.

Exemple 11

Essai de réextraction de l'uranium contenu dans les phases organiques à l'aide d'acide fluorhydrique.

Une phase organique contenant 0,05 M de composé diphosphonique issu du Tallol et diestérifiée chargée à 4,2 grammes par litre d'uranium est mise en contact avec des quantités variables d'acide fluorhydrique à 50 %. Avec une O/A de 40,80 % de l'uranium est déjà précipité sous forme de son tétrafluorure. Avec une O/A de 3,99 % de l'uranium est récupéré.

Ces résultats devraient être améliorés si avant de faire la réextraction on lavait la phase organique pour la débarrasser de l'acide phosphorique dissous par exemple avec de l'acide sulfurique concentré.

La phase organique ainsi régénérée a été mise à nouveau en contact avec une phase aqueuse contenant 30 % d'acide phosphorique, 15 grammes par litre de fer totalement réduit. La charge obtenue au bout d'un contact permet d'atteindre la saturation et de constater que le produit diphosphoné, malgré un contact de plus d'une journée avec de l'acide fluorhydrique à 50 %, n'a pas vu ses caractéristiques d'extraction altérées.

Exemple 12

Essai comparatif des produits estérifiés et non estérifiés.

Des solutions d'acide phosphoriques à 30 % de $P_2O_5$ sont mises en contact avec une phase organique contenant de l'acide naphténique après hydroxy-diphosphonation et le produit provenant de l'estérification du premier produit. Les teneurs sont indiquées dans le tableau suivant ainsi que les résultats de l'extraction.

| | Dérivé non estérifié | | | Dérivé estérifié | | |
|---|---|---|---|---|---|---|
| | U g/l | Fe g/l | P g/l | U g/l | Fe g/l | P g/l |
| Phase aqueuse initiale | 0,15 | 14,2 | - | 0,15 | 14,2 | - |
| Phase organique vierge | | | 3,67 | | | 2,70 |
| Phase organique chargée | 1,30 | 1,01 | 3,38 | 1,03 | 0,55 | 2,70 |
| Phase aqueuse épuisée | 50 mg/l | 14,2 | | 50 mg/l | 14,5 | - |

Exemple 13

Essai de fixation d'uranium par percolation sur un lit de résine.

Une résine préparée comme décrite dans l'exemple 6 contenant, après des cycles de mise en forme acido-basiques, 9 % de phosphore en poids, est placée dans une colonne et une solution d'acide phosphorique à 30 % de $P_2O_5$ ayant la composition suivante : Fe total 2 g/l, taux de réduction du Fe 50 %, teneur en uranium 124 mg/l, est percolée à une vitesse de 6 bv (volume du lit de résine par heure). Puis la résine est rincée à contre courant et enfin est éluée à co-courant par une solution de 100 g/l de sulfate ferrique à raison d'un bv par heure.

Toutes ces opérations sont réalisées à une température de 60 °C.

Au cours des 20 premiers bv, il n'y a aucune trace d'uranium décelable à l'analyse. Ensuite la teneur en uranium de la solution phosphorique après percolation augmente lentement.

Une fois la concentration initiale atteinte (120 bv environ), on calcule la quantité totale d'uranium fixé qui est égale à 10 g/l environ.

A la suite de la percolation, l'élution permet de récupérer 95 % de l'uranium fixé.

Toutefois, la teneur de l'éluat ne dépasse pas 0,7 g/l, cela est sans doute dû à la lenteur de l'échange entre la résine et la solution et la lenteur de réalisation de l'oxydation de l'uranium IV en uranium VI.

Exemple 14

Essai de fixation d'uranium à différentes teneurs de $P_2O_5$ et à différents taux d'oxydation.

Ces essais ont été menés sur la résine fabriquée comme décrit dans l'exemple n° 15.

2 ml de résine gonflée ayant subi des cycles acido-basiques d'activation et de mise en forme, sont mis dans des béchers en contact avec 40 ml de solution phosphorique contenant de l'uranium et du fer à un état d'oxydation spécifié dans le tableau suivant.

| | Etat des cations | | U mg/l | Fe g/l | $SO_4^{--}$ g/l | $P_2O_5$ g/l |
|---|---|---|---|---|---|---|
| | Fe | U | | | | |
| S.I. | II | IV | 410 | | | |
| S.F. | II | IV | 100 | | | |
| S.I. | II | IV | 505 | 24,1 | 77,8 | 632 |
| S.F. | II | IV | 190 | 23,3 | 78,5 | 635 |
| S.I. | III | VI | 405 | | | |
| S.F. | III | VI | 240 | | | |
| S.I. | III | VI | 495 | 26,7 | 99,0 | 694 |
| S.F. | III | VI | 380 | 26,7 | 101 | 713 |

S.I. : solution initiale
S.F. : solution finale

Exemple 15

Exemple de synthèse.

On fait passer 50 g de résine DUOLITE ES 466, commercialisée par la Sté « DIAPROSIM », placés dans une colonne, sous forme acide par percolation à l'aide de 2 litres d'acide chlorhydrique 1 N. On rince abondamment la résine et on sèche par entraînement azéotropique au benzène. On a fait gonfler 250 ml de DIOXANE, 30 g de résine sèche. On a alors versé sur la résine gonflée sous agitation, 11,2 ml d'eau (soit 0,63 mole) et, lentement, 34 ml $PCl_3$ (soit 0,4 mole). On a porté la température à 95 °C et on a maintenu le milieu dans ces conditions pendant 3 heures. Au bout de ce temps, on a laissé refroidir le mélange à environ 60 °C et on a ajouté à nouveau 11,2 ml d'eau à 34 ml de $PCl_3$, puis on a chauffé 3 heures à 95 °C. On prélève un échantillon de la résine obtenue, qu'on a lavé à l'eau déminéralisée et séché par distillation azéotropique au benzène. Cette résine possédait déjà un taux de phosphore de 10 % en poids. Sur le reste du mélange on a réitéré 2 fois le cycle précédent après quoi on a obtenu, après rinçage et séchage comme indiqué précédemment, 42 g de résine montrant un taux de phosphore de 16,5 % en poids, sous forme de sites hydroxydiphosphoniques.

La résine de départ est une résine du type polystyrène porteur de groupes amino-diacétiques, réticulé à l'aide de divinylbenzène.

Exemple 16

Essai d'extraction d'éléments divers par résine hydroxydiphosphonée et solvant, après hydroxy-diphosphonation et di-estérification du Tallol.

| Elément Solution A $H^+$ = 0,3 N | Elément Solution B $H^+$ = 2 N | RENDEMENT D'EXTRACTION | | |
|---|---|---|---|---|
| | | Résine | L8 0,1 M | L9 0,1 M |
| U (IV) | | 100 % | 100 % | 100 % |
| Mn (II) | | 50 % | 100 % | 100 % |
| Co (II) | | 0 | 50 % | 50 % |
| Ni (II) | | 0 | 0 | 0 |
| Cu (II) | | 50 % | 75 % | 75 % |
| Zn (II) | | 10 à 15% | 40 % | 60 % |
| Ga (III) | | 100 % | 100 % | 100 % |
| Ge (II) | | 85 % | 100 % | 100 % |
| Cd (II) | | 50 % | 50 % | 50 % |
| In (III) | | 100 % | 100 % | 100 % |
| | Mo (VI) | | 100 % | 100 % |
| | Hg (II) | | 90 % * | 30 % |
| | Pb (II) | | 100 % | 100 % |
| | Bi (III) | | 100 % | 100 % |

* Douteux

RESINE : Résine de l'exemple 15 après diphosphonation
L 8 : Acide hydroxydiphosphonique dérivé du Tallol
L 9 : Ester diéthylique de L 8
L 8 et L 9 : 5 % d'Octanol

Exemple 17

L'essai est réalisé sur de l'acide phosphorique industriel ayant l'analyse moyenne suivante :
Fluor : 141 g/l (principale sous forme de $SiF_4$)
Sulfates : 33 g/l
Calcium : 10 g/l
Aluminium : 3,2 g/l
$P_2O_5$ : 330 g/l
La concentration en uranium et en fer de la solution est indiquée pour chaque essai.
Une résine acrylique est modifiée suivant l'exemple 6 et présente les caractéristiques suivantes :
— capacité d'échange avant modification : 9 équivalents/kg
— teneur en phosphore : 4 %/kg de résine sèche est soumise à 5 cycles de traitement consistant à la mettre en contact avec de la soude caustique 1 N et ensuite avec de l'acide sulfurique 1 M. A la fin de ces cycles 1 litre de résine humide correspondant à 343 g de résine sèche.

a) Absorption de l'uranium par la résine ci-après.

Les essais ont été réalisés sur une colonne de 100 ml à 60 °C, les autres paramètres étant spécifiés ci-après :

(Voir tableau page 16)

| | Essai 1 : 3 BV/h | Essai 2 : 1,5 BV/h |
|---|---|---|
| [Fe] dans l'acide phosphorique | 12 g/l<br>(99 → 95 % $Fe^{++}$) | 12 g/l<br>(99 → 95 % $Fe^{++}$) |
| [U] dans l'acide phosphorique | 131 mg/l | 136 mg/l |
| Volume total d'acide | 2,8 l | 5,1 l |
| Quantité d'uranium fixé par la résine | 254 mg | 248 mg |
| Capacités | 2,5 g/l<br>7,3 g/kg | 2,5 g/l<br>7,3 g/kg |

Des cycles ultérieurs d'extraction d'uranium et d'élution montrent qu'il est préférable d'éluer le fer avant l'extraction de l'uranium, par exemple avec l'acide chlorhydrique (6 à 12 N) et que plus les espèces présentes sont réduites mieux l'uranium est extrait.

b) Elution

La résine est alors éluée par une solution de $(NH_4)_2CO_3$ 100 g/l + $H_2O_2$ (10 ml d'$H_2O_2$ 36 %/l)
Les conditions et les résultats sont réunis dans le tableau suivant :

<table>
<tr><th>Essai 1</th><th colspan="4">Essai 2</th></tr>
<tr><td rowspan="4">En bécher : 250 ml de solution extractante<br>108 mg U<br>([U] = 0,43 g/l) 43 %<br>10 mg Fe<br>([Fe] = 0,04 g/l)</td><td colspan="4">Sur colonne (après neutralisations par $NH_3$ 1/10)</td></tr>
<tr><td rowspan="2">Nombre de BV</td><td colspan="2">Teneur de la solution d'élution</td><td rowspan="2">Récupération (en %)</td></tr>
<tr><td>U mg</td><td>U g/l</td></tr>
<tr><td>1,5<br>3<br>4,5<br>6<br>7,5</td><td>120<br>45<br>34,5<br>27<br>13,5</td><td>0,80<br>0,30<br>0,23<br>0,18<br>0,09</td><td>48<br>18<br>14<br>11<br>5<br>96</td></tr>
<tr><td>Analyse de la résine après élution : % P 4,24<br>% Fe 0,48</td><td colspan="4">% P 3,64 (Résine sous la<br>% Fe 0,75 forme "$NH_4^+$")</td></tr>
</table>

Les composés synthétisés dans les exemples 1 et 2 ont été testés sur la même solution phosphorique et ils démontrent tous une grande capacité d'extraction de l'uranium.

**Revendications**

1. Composition échangeuse d'ions de métaux choisis dans le groupe constitué par les actinides, les lanthanides, l'yttrium, les éléments de transitions tri- ou tétravalent, le plomb, le zinc, le cuivre, le nickel, le cobalt, le chrome, l'antimoine, le gallium, le vanadium, le cadmium, l'indium, le molybdène, le thallium, le mercure, le bismuth et le germanium, caractérisée par le fait qu'elle contient au moins un dérivé diphosphonique dont la forme acide est représentée par la formule générale G suivante :

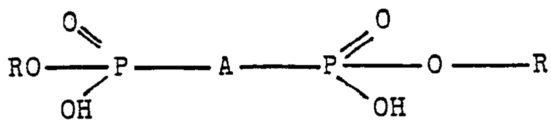

où R est choisi dans le groupe constitué par les restes alcoyles comportant 1 à 12 atomes de carbone et au plus 2 ramifications sur la chaîne principale et par l'hydrogène ;
où A est un radical organique divalent comportant au moins 8 atomes de carbones choisi dans le groupe des éthylènes mono, di ou tri-substitués et des méthylènes mono ou di-substitués ;
par le fait que le nombre total d'atomes de carbone est compris entre 10 et 50 ;
et par le fait que ledit dérivé répondant à la formule G est dissous dans un diluant hydrocarboné et un composé polaire lipophile non miscible à l'eau choisi dans le groupe constitué par les alcools, les cétones, les triesters de l'acide phosphoriques, les sulfones, les sulfoxydes, les dérivés halogénés, les oxydes de trialcoyl-phosphine et les acides carboxyliques à longue chaîne, à une concentration comprise entre 0,01 et 0,2 M.

2. Composition selon la revendication 1, caractérisée par le fait que A est un radical hydroxy-méthylène.

3. Composition selon la revendication 1, caractérisée par le fait que A est un radical amino-méthylène.

4. Composition selon les revendications 1 à 3 prises séparément, caractérisée par le fait que R = H.

5. Composition selon la revendication 4, caractérisée par le fait que le nombre total d'atomes de carbone est compris entre 15 et 40.

6. Composition selon les revendications 1 à 5 prises séparément, caractérisée par le fait que le nombre total d'atomes de carbone du groupement A est compris entre 15 et 25.

7. Composition selon les revendications 1 à 6 prises séparément, caractérisée par le fait que le nombre d'atomes de carbone du groupement R est compris entre 1 et 15.

8. Composition selon les revendications 1 à 7 prises séparément, caractérisée par le fait qu'elle est constituée par un dérivé répondant à la formule G dissous dans un diluant hydrocarboné choisi dans le groupe des hydrocarbures saturés et insaturés et leurs mélanges.

9. Composition selon les revendications 1 à 8 prises séparément, caractérisée par le fait que la proportion de composé polaire lipophile non miscible à l'eau est comprise entre 1 et 20 %.

10. Composition selon les revendications 1 à 9 prises séparément, caractérisée par le fait que le composé polaire lipophile non miscible à l'eau est un alcool primaire, secondaire ou tertiaire présentant de 5 à 12 atomes de carbone.

11. Composition selon les revendications 8 à 10 prises séparément, caractérisée par le fait que ledit dérivé diphosphonique est un dérivé diphosphonique selon les revendications 12 à 20 prises séparément.

12. Dérivé diphosphonique de formule G', caractérisé par le fait qu'il répond à la formule générale G où le groupement A comporte au moins 8 atomes de carbone et répond à la formule :

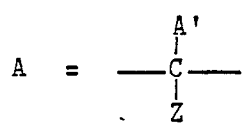

où R est choisi dans le groupe constitué par l'atome d'hydrogène et les restes hydrocarbyles de 1 à 15 atomes de carbone ;
où A' est choisi dans le groupe constitué par les radicaux hydrocarbyles ayant de 1 à 30 atomes de carbone et au plus deux ramifications, par les chaînes latérales d'une résine comportant d'autres chaînes latérales porteuses de groupes du type G' et ayant un taux de phosphore d'au moins 5 % ;
où Z est choisi dans le groupe constitué par les radicaux hydrocarbyles ayant de 1 à 30 atomes de carbone et au plus deux ramifications, par les groupements aminés ($NH_2$ non-, mono- ou di-substitués), par les groupements alcools (OH non- ou substitués) et par l'atome d'hydrogène ;
que le nombre total de carbones desdits dérivés est compris entre 10 et 50 ;
et que, lorsque Z est hydrophile et que les groupements acide phosphonique ne sont pas estérifiés, le groupement A' comporte au moins 14 atomes de carbone.

13. Dérivé diphosphonique selon la revendication 12, caractérisé par le fait que le groupement A comporte entre 15 et 25 atomes de carbone.

14. Dérivé diphosphonique selon les revendications 12 et 13 prises séparément, caractérisé par le fait que Z est choisi dans le groupe des fonctions aminée et hydroxyle et en ce que le groupement A' comporte au moins 14 atomes de carbone.

15. Dérivé diphosphonique selon les revendications 12 à 14 prises séparément, caractérisé par le fait que le radical R de la formule G est un radical alcoyle.

16. Dérivé diphosphonique selon les revendications 12 à 15 prises séparément, caractérisé par le fait que le radical R comporte de 8 à 12 atomes de carbone.

17. Dérivé diphosphonique selon les revendications 12 à 16 prises séparément, caractérisé par le fait que ledit dérivé diphosphonique est dérivé d'un acide gras par une diphosphonation à l'aide du trichlorure de phosphore.

18. Dérivé diphosphonique selon la revendication 17, caractérisé par le fait que le radical A comporte de 15 à 25 atomes de carbone.

19. Dérivé diphosphonique selon les revendications 17 à 18 prises séparément, caractérisé par le fait que ledit acide gras présente une chaîne linéaire.

20. Dérivé diphosphonique selon les revendications 17 à 19 prises séparément, caractérisé par le fait que ledit acide gras ayant subi une diphosphonation à l'aide du trichlorure de phosphore a subi une diestérification.

21. Résine échangeuse d'ions, caractérisée par le fait que son groupement actif est un groupement diphosphonique dont la forme acide est représentée par la formule générale G suivante :

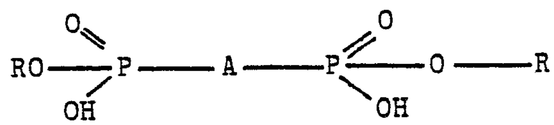

où R est choisi dans le groupe constitué par les restes alcoyles comportant 1 à 12 atomes de carbone et au plus 2 ramifications sur la chaîne principale et par l'hydrogène ;
où A est un radical organique divalent choisi dans le groupe des éthylènes mono, di ou tri-substitués et des méthylènes mono ou di-substitués, un des substituants étant la chaîne raccordant ledit groupement diphosphonique au squelette de la résine.

22. Résine échangeuse d'ions selon la revendication 21, caractérisée par le fait que ledit squelette de ladite résine est choisi dans le groupe constitué par deux des résines acryliques et les polystyrènes réticulés.

23. Résine échangeuse d'ions selon les revendications 21 et 22 prises séparément, caractérisée par le fait que le taux de phosphore en poids de la résine est compris entre 10 et 25 %.

24. Résine échangeuse d'ions selon les revendications 21 à 23 prises séparément, caractérisée par le fait qu'elle porte des groupes de formule générale G où A répond à la formule :

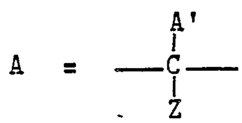

où A' est choisi dans le groupe constitué par les chaînes latérales d'une résine comportant d'autres chaînes latérales porteuses de groupes du type G' et ayant un taux de phosphore d'au moins 5 % ;
où Z est choisi dans le groupe constitué par les radicaux hydrocarbyles ayant de 1 à 30 atomes de carbone et au plus deux ramifications, par les groupements aminés ($NH_2$ non-, mono- ou di-substitués), par les groupements alcools (OH non- ou substitués) et par l'atome d'hydrogène.

25. Résine échangeuse d'ions selon la revendication 24, caractérisée par le fait que Z est choisi dans le groupe des fonctions aminée et hydroxyle.

26. Résine échangeuse d'ions selon les revendications 24 et 25 prises séparément, caractérisée par le fait que le radical R de la formule G est un radical alcoyle.

27. Résine échangeuse d'ions selon les revendications 24 à 26 prises séparément, caractérisée par le fait que le radical R est un atome d'hydrogène.

28. Résine échangeuse d'ions selon les revendications 25 à 27 prises séparément, caractérisée par le fait qu'elle est obtenue par le procédé selon la revendication 30.

29. Procédé de synthèse de résine échangeuse d'ions selon la revendication 23, caractérisé par le fait qu'il comprend les étapes suivantes :

(1) on acidifie une résine portant des groupes acides carboxyliques à l'aide d'un acide minéral ;

(2) on rince la résine acidifiée afin d'éliminer les traces d'acide minéral ;

(3) on amène la résine à un degré de siccité au moins égal à celui obtenu par entraînement azéotropique au benzène ;

(4) on fait gonfler la résine séchée à l'aide d'un solvant inerte comportant de préférence au moins un pont éther et capable de dissoudre au moins 3 % de son volume d'eau et au moins 8 % de son volume de trichlorure de phosphore ;

(5) on ajoute à la résine gonflée entre 5 et 50 % de son volume d'eau et de trichlorure de phosphore, à raison de 1 à 2,5 mole d'eau par mole de trichlorure de phosphore ;

(6) on porte la température entre 90 et 140 °C pendant 0,5 à 10 heures ;

(7) on réitère les opérations (5) et (6) au moins une fois et de préférence au moins deux fois, en abaissant éventuellement la température entre 20 et 80 °C avant chaque nouvelle introduction ;

(8) on rince à l'eau et on sèche la résine ;

(9) on estérifie éventuellement la résine, de manière connue en soi.

30. Procédé selon la revendication 29, caractérisé par le fait que le solvant à l'état (4) est choisi dans le groupe constitué par le dioxane et le tétrahydrofurane.

31. Application des compositions selon les revendications 1 à 11 à la récupération de l'uranium contenu dans l'acide phosphorique, caractérisée par le fait que :

(a) on met en contact l'acide phosphorique avec ladite composition ;

(b) on soumet ladite composition à une réextraction au moyen de réactifs choisis dans le groupe constitué par les réactifs basiques connus en soi pour la réextraction de l'acide octyl-pyrophosphorique, les solutions de carbonate de métaux alcalins ou d'ammonium en milieu oxydant et l'acide fluorhydrique.

32. Application des résines selon les revendications 21 à 28, à la récupération de l'uranium contenu dans l'acide phosphorique, caractérisée par le fait que :

(a) on met en contact l'acide phosphorique avec ladite résine ;

(b) on soumet ladite résine à une réextraction au moyen de réactifs choisis dans le groupe constitué par les réactifs choisis dans le groupe constitué par les carbonates d'ammonium ou de métaux alcalins et le sulfate ferrique.

33. Application selon la revendication 32, caractérisée par le fait que ledit réactif de réextraction de l'étape (b) est un carbonate d'ammonium ou de métaux alcalins à une concentration comprise entre 10 et 200 grammes par litre en milieu oxydant.

**Claims**

1. A composition for exchange of ions of metals selected from the group consisting of actinides, lanthanides, yttrium, trivalent or tetravalent transition elements, lead, zinc, copper, nickel, cobalt, chromium, antimony, gallium, vanadium, cadmium, indium, molybdenum, thallium, mecury, bismuth and germanium, characterised in that the composition contains at least one diphosphonic derivative, the acid form of which is represented by the following general formula G :

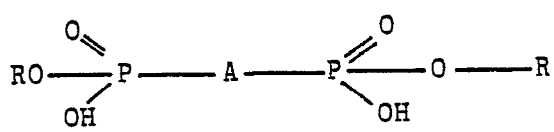

in which R is selected from the group consisting of alkyl residues comprising from 1 to 12 carbon atoms having at most two branches on the main chain, and of hydrogen,
and A is a divalent organic radical comprising at least 8 carbon atoms selected from the group of mono-, di- or or tri-substituted ethylenes and mono- di-substituted methylenes ;
in that the total number of carbon atoms is between 10 and 50 ;
and in that said derivative corresponding to the formula G is dissolved in a hydrocarbon diluent and a lipophilic polar compound which is immiscible with water, selected from the group consisting of alcohols, ketones, triesters of phosphoric acid, sulphones, sulphoxides, halogenated derivatives, trialkylphosphine oxides, and long-chain carboxylic acids, in a concentration between 0.01 and 0.2 M.

2. A composition as claimed in Claim 1, characterised in that A is a hydroxymethylene radical.

3. A composition as claimed in Claim 1, characterised in that A is an aminomethylene radical.

4. A composition as claimed in any of Claims 1 to 3, characterised in that R = H.

5. A composition as claimed in Claim 4, characterised in that the total number of carbon atoms is between 15 and 40.

6. A composition as claimed in any of Claims 1 to 5, characterised in that the total number of carbon atoms in the radical A is between 15 and 25.

7. A composition as claimed in any of Claims 1 to 6, characterised in that the number of carbon atoms in the alkyl residue represented by R is between 1 and 15.

8. A composition as claimed in any of Claims 1 to 7, characterised in that it consists of a derivative corresponding to the formula G dissolved in a hydrocarbon diluent selected from the group of saturated and unsaturated hydrocarbons, and their mixtures.

9. A composition as claimed in any of Claims 1 to 8, characterised in that the proportion of lipophilic polar compound which is immiscible with water is between 1 and 20 %.

10. A composition as claimed in any of Claims 1 to 9, characterised in that the lipophilic polar compound which is immiscible with water is a primary, secondary or tertiary alcohol having from 5 to 12 carbon atoms.

11. A composition as claimed in any of Claims 8 to 10, characterised in that said diphosphonic derivative is a diphosphonic derivative as claimed in any of the following Claims 12 to 20.

12. A diphosphonic derivative of the formula G', characterised in that it corresponds to the general formula G in which the radical A comprises at least 8 carbon atoms and corresponds to the formula :

A = 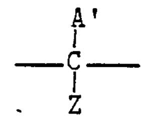

in which R is selected from the group consisting of a hydrogen atom and hydrocarbon residues of from 1 to 15 carbon atoms ;
in which A' is selected from the group consisting of hydrocarbon radicals having from 1 to 30 carbon atoms and at most two branches, of the lateral chains of a resin comprising other lateral chains carrying groups of the type G' and having a proportion of phosphorus of at least 5 % ;
and in which Z is selected from the group consisting of hydrocarbon radicals having from 1 to 30 carbon atoms and at most two branches, of amino groupings (non-, mono- or di-substituted $NH_2$), of alcohol groupings (non-substituted or substituted OH) and of hydrogen atoms ;
in that the total number of carbon atoms in said derivatives is between 10 and 50 ;
and in that, when Z is hydrophilic and the phosphonic acid groups are not esterified, the group A' has at least 14 carbon atoms.

13. A diphosphonic derivative as claimed in Claim 12, characterised in that the radical A has between 15 and 25 carbon atoms.

14. A diphosphonic derivative as claimed in Claim 12 or Claim 13, characterised in that Z is selected from the group of amino and hydroxyl functions and in that the group A' has at least 14 carbon atoms.

15. A diphosphonic derivative as claimed in any of Claims 12 to 14, characterised in that the radical R of formula G is an alkyl radical.

16. A diphosphonic derivative as claimed in any of Claims 12 to 15, characterised in that the radical R has from 8 to 12 atoms.

17. A diphosphonic derivative as claimed in any of Claims 12 to 16, characterised in that said diphosphonic derivative is derived from a fatty acid by diphosphonation with phosphorus trichloride.

18. A diphosphonic derivative as claimed in Claim 17, characterised in that the radical A has from 15 to 25 carbon atoms.

19. A diphosphonic derivative as claimed in Claim 17 or Claim 18, characterised in that said fatty acid has a linear chain.

20. A diphosphonic derivative as claimed in any of Claims 17 to 19, characterised in that said fatty acid, having been subjected to diphosphonation by means of phosphorus trichloride, is subjected to diesterification.

21. An ion-exchange resin, characterised in that its active group is a diphosphonic group, the acid form of which is represented by the following general formula G :

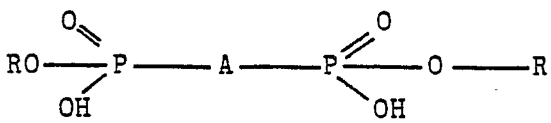

in which R is selected from the group consisting of alkyl residues having from 1 to 12 carbon atoms and at most two branches on the main chain, and of hydrogen ;
and in which A is a divalent organic radical selected from the group consisting of mono-, di- or tri-substituted ethylenes and of mono- or di-substituted methylenes, one of the substituents being the chain connecting said diphosphonic group to the skeleton of the resin.

22. An ion-exchange resin as claimed in Claim 21, characterised in that said skeleton of said resin is selected from the group consisting of acrylic resins and cross-linked polystyrene resins.

23. An ion-exchange resin as claimed in Claim 21 or Claim 22, characterised in that the proportion of phosphorus by weight in the resin lies between 10 and 25 %.

24. An ion-exchange resin as claimed in any of Claims 21 to 23, characterised in that it carries groups of the general formula G in which A corresponds to the formula :

A = 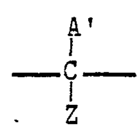

in which A' is selected from the group consisting of the lateral chains of a resin comprising other lateral chains carrying groups of the type G' and having a proportion of phosphorus of at least 5 % ;
in which Z is selected from the group consisting of hydrocarbon radicals having 1 to 30 carbon atoms and

at most two branches, of amino groupings (non-, mono- or disubstituted $NH_2$), of alcohol groupings (non-substituted or substituted OH), and of a hydrogen atom ;

25. An ion-exchange resin as claimed in Claim 24, characterised in that Z is selected from the group consisting of amino and hydroxyl groupings.

26. An ion-exchange resin as claimed in Claim 24 or 25, characterised in that the radical R in the formula G is an alkyl radical.

27. An ion-exchange resin as claimed in any of Claims 24 to 26, characterised in that the radical R is a hydrogen atom.

28. An ion-exchange resin as claimed in any of Claims 25 to 27, characterised in that it is obtained by the process as claimed in the following Claim 30.

29. A process for the synthesis of ion-exchange resin as claimed in Claim 23, characterised in that it comprises the following stages :

(1) a resin carrying carboxylic acid groups is acidified by means of an inorganic acid ;

(2) the acidified resin is rinsed in order to eliminate the traces of inorganic acid ;

(3) the resin is brought to a degree of dryness at least equal to that obtained by azeotropic entrainment with benzene ;

(4) the dried resin is caused to swell by means of an inert solvent preferably comprising at least one ether bridge and capable of dissolving at least 3 % of its volume of water and at least 8 % of its volume of phosphorus trichloride ;

(5) there are added to the swollen resin between 5 and 50 % of its volume of water and of phosphorus trichloride, at the rate of 1 to 2.5 mols of water per mol of phosphorus trichloride ;

(6) the temperature is maintained between 90 and 140 degrees centigrade for a period of 0.5 to 10 hours ;

(7) the operations (5) and (6) are repeated at least once and preferably at least twice, possibly lowering the temperature to between 20 and 80 degrees centigrade before each fresh introduction ;

(8) the resin is rinsed with water and dried ;

(9) the resin is possibly esterified in a manner known per se.

30. A process as claimed in Claim 29, characterised in that the solvent in stage (4) is selected from the group consisting of dioxan and tetrahydrofuran.

31. Application of the compositions as claimed in Claims 1 to 11 to the recovery of uranium contained in phosphoric acid, characterised in that :

(a) the phosphoric acid is brought into contact with said composition ;

(b) said composition is subjected to re-extraction by means of reagents selected from the group consisting of basic reagents known per se for the re-extraction of octylpyrophosphoric acid, solutifons of alkali metal or ammonium carbonate in an oxidizing medium, and hydrofluoric acid.

32. Application of the resins as claimed in Claims 21 to 28 to the recovery of uranium contained in phosphoric acid, characterised in that :

(a) the phosphoric acid is brought into contact with said resin ;

(b) said resin in subjected to re-extraction by means of reagents selected from the group consisting of ammonium or alkali metal carbonates and ferric sulphate.

33. Application as claimed in Claim 32, characterised in that said re-extraction reagent of stage (b) is an ammonium or alkali metal carbonate in a concentration of between 10 and 200 grams per litre of oxidizing medium.

**Patentansprüche**

1. Zusammensetzung zum Austausch von Metallionen aus der aus Aktiniden, Lanthaniden, Yttrium, drei- oder vierwertigen Übergangselementen, Blei, Zink, Kupfer, Nickel, Kobalt, Chrom, Antimon, Gallium, Vanadium, Cadmium, Indium, Molybdän, Thallium, Quecksilber, Wismut und Germanium bestehenden Gruppe dadurch gekennzeichnet, daß sie wenigstens ein Diphosphonsäure-Derivat enthält, dessen Säure-Form durch die folgende allgemeine Formel G wiedergegeben wird :

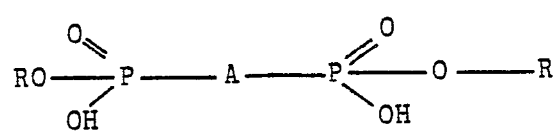

worin R ein Alkylrest mit 1 bis 12 Kohlenstoffatomen und höchstens 2 Verzweigungen in der Hauptkette oder Wasserstoff ist,

A ein organischer, zweiwertiger, wenigstens 8 Kohlenstoffatome aufweisender Rest aus der Gruppe der mono-, di- oder trisubstituierten Ethylene und mono- oder disubstituierten Methylene ist,

daß die Gesamtzahl von Kohlenstoffatomen im Bereich von 10 bis 50 liegt und

daß dieses der Formel G entsprechende Derivat in einem Kohlenwasserstoff als Verdünnungsmittel und einer polaren, lipophilen, mit Wasser nicht mischbaren Verbindung, die aus der aus Alkoholen, Ketonen,

Phosphorsäuretriestern, Sulfonen, Sulfoxiden, Halogenderivaten, Trialkylphosphinoxiden und langkettigen Carbonsäuren gebildeten Gruppe gewählt ist, in einer Konzentration von 0,01 bis 0,2 M gelöst wird.

2. Zusammensetzung nach Anspruch 1, dadurch gekennzeichnet, daß A ein Hydroxymethylen-Rest ist.

3. Zusammensetzung nach Anspruch 1, dadurch gekennzeichnet, daß A ein Aminomethylen-Rest ist.

4. Zusammensetzung nach einem der Ansprüche 1 bis 3, dadurch gekennzeichnet, daß R = H.

5. Zusammensetzung nach Anspruch 4, dadurch gekennzeichnet, daß die Gesamtzahl der Kohlenstoffatome im Bereich von 15 bis 40 liegt.

6. Verfahren nach einem der Ansprüche 1 bis 5, dadurch gekennzeichnet, daß die Gesamtzahl der Kohlenstoffatome der Gruppe A im Bereich von 15 bis 25 liegt.

7. Zusammensetzung nach einem der Ansprüche 1 bis 6, dadurch gekennzeichnet, daß die Zahl der Kohlenstoffatome der Gruppe R im Bereich von 1 bis 15 liegt.

8. Zusammensetzung nach einem der Ansprüche 1 bis 7, dadurch gekennzeichnet, daß sie aus einem der Formel G entsprechenden Derivat besteht, das in einem Kohlenwasserstoff als Verdünnungsmittel gelöst ist, das aus der Gruppe der gesättigten und ungesättigten Kohlenwasserstoffe und ihrer Gemische gewählt ist.

9. Zusammensetzung nach einem der Ansprüche 1 bis 8, dadurch gekennzeichnet, daß der Anteil der polaren, lipophilen, mit Wasser nicht mischbaren Verbindung im Bereicht von 1 bis 20 % liegt.

10. Zusammensetzung nach einem der Ansprüche 1 bis 9, dadurch gekennzeichnet, daß die polare, lipophile, mit Wasser nicht mischbare Verbindung ein primärer, sekundärer oder tertiärer Alkohol mit 5 bis 12 Kohlenstoffatomen ist.

11. Zusammensetzung nach einem der Ansprüche 8 bis 10, dadurch gekennzeichnet, daß dieses Diphosphonsäure-Derivat ein Diphosphonsäure-Derivat nach einem der Ansprüche 12 bis 20 ist.

12. Diphosphonsäure-Derivat der Formel G', dadurch gekennzeichnet, daß es der allgemeinen Formel G entspricht, worin die Gruppe A wenigstens 8 Kohlenstoffatome aufweist und der Formel entspricht:

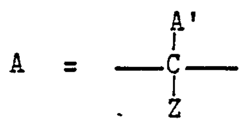

wobei R ein Wasserstoffatom oder ein Kohlenwasserstoffrest mit 1 bis 15 Kohlenstoffatomen ist, worin A' aus der aus Kohlenwasserstoffresten mit 1 bis 30 Kohlenstoffatomen und höchstens zwei Verzweigungen, aus den Seitenketten eines Harzes, das andere Seitenketten mit Gruppen der Formel G' und einen Phosphoranteil von wenigstens 5 % aufweist, gebildeten Gruppe ausgewählt ist,
worin Z aus der aus Kohlenwasserstoffresten mit 1 bis 30 Kohlenstoffatomen und höchstens zwei Verzweigungen, Aminogruppen (nichtsubstituiertes, mono- oder disubstituiertes $NH_2$), Alkoholgruppen (nichtsubstituiertes oder substituiertes OH) und Wasserstoff gebildeten Gruppe ausgewählt ist,
daß die Gesamtzahl der Kohlenstoffatome dieser Derivate im Bereich von 10 bis 50 liegt und daß, wenn Z hydrophil ist und die Phosphonsäuregruppen nicht verestert sind, die Gruppe A' wenigstens 14 Kohlenstoffatome aufweist.

13. Diphosphonsäure-Derivat nach Anspruch 12, dadurch gekennzeichnet, daß die Gruppe A 15 bis 25 Kohlenstoffatome aufweist.

14. Diphosphonsäure-Derivat nach Anspruch 12 oder 13, dadurch gekennzeichnet, daß Z aus der Gruppe der Amino- und Hydroxylgruppen gewählt ist und daß die Gruppe A' wenigstens 14 Kohlenstoffatome aufweist.

15. Diphosphonsäure-Derivat nach einem der Ansprüche 12 bis 14, dadurch gekennzeichnet, daß der Rest R der Formel G ein Alkylrest ist.

16. Diphosphonsäure-Derivat nach einem der Ansprüche 12 bis 15, dadurch gekennzeichnet, daß der Rest R 8 bis 12 Kohlenstoffatome aufweist.

17. Diphosphonsäure-Derivat nach einem der Ansprüche 12 bis 16, dadurch gekennzeichnet, daß es sich von einer Fettsäure ableitet, die mit Hilfe von Phosphortrichlorid disphoniert worden ist.

18. Diphosphonsäure-Derivat nach Anspruch 17, dadurch gekennzeichnet, daß der Rest A 15 bis 25 Kohlenstoffatome aufweist.

19. Diphosphonsäure-Derivat nach Anspruch 17 oder 18, dadurch gekennzeichnet, daß die Fettsäure eine lineare Kette aufweist.

20. Diphosphonsäure-Derivat nach einem der Ansprüche 17 bis 19, dadurch gekennzeichnet, daß die mit Phosphortrichlorid diphosphonierte Fettsäure einer Zweifach-Veresterung unterworfen wird.

21. Ionenaustauscherharz, dadurch gekennzeichnet, daß seine aktive Gruppe eine Diphosphonsäure-Gruppe ist, deren Säure-Form durch die folgende allgemeine Formel G wiedergegeben wird:

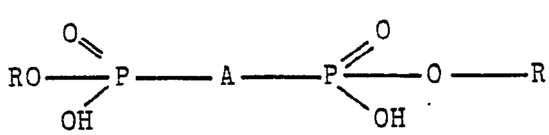

worin R aus der Gruppe gewählt ist, die aus Alkylresten mit 1 bis 12 Kohlenstoffatomen und höchstens zwei Verzweigungen in der Hauptkette und aus Wasserstoff gebildet ist,
worin A ein organischer, zweiwertiger Rest aus der Gruppe der mono-, di- oder trisubstituierten Ethylene und der mono- oder disubstituierten Methylene gewählt ist, wobei einer der Substituenten die die Diphosphonsäure-Gruppe mit dem Skelett des Harzes verbindende Kette ist.

22. Ionnenaustauscherharz nach Anspruch 21, dadurch gekennzeichnet, daß das Skelett dieses Harzes aus zwei Acrylsäureharzen oder vernetzten Polystyrolen gebildet wird.

23. Ionenaustauscherharz nach Anspruch 21 oder 22, dadurch gekennzeichnet, daß der gewichtsmäßige Phosphoranteil des Harzes im Bereich von 10 bis 25 % liegt.

24. Ionenaustauscherharz nach einem der Ansprüche 21 bis 23, dadurch gekennzeichnet, daß es Gruppen der allgemeinen Formel G trägt, worin A der Formel entspricht :

A = 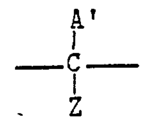

worin A' aus der Gruppe gewählt ist, die aus den seitlichen Ketten eines Harzes, das andere Seitenketten mit Gruppen der Formel G' und einen Phosphoranteil von wenigstens 5 % aufweist, gebildet ist,
worin Z aus der Gruppe gewählt ist, die aus Kohlenwasserstoffresten mit 1 bis 30 Kohlenstoffatomen und höchstens zwei Verzweigungen, aus Aminogruppen (nichtsubstituierte, mono- oder disubstituiertes $NH_2$), aus Alkoholgruppen (nichtsubstituiertes oder substituiertes OH) und aus Wasserstoff gebildet ist.

25. Ionenaustauscherharz nach Anspruch 24, dadurch gekennzeichnet, daß Z aus der Gruppe der Amino- und Hydroxylgruppen gewählt ist.

26. Ionenaustauscherharz nach Anspruch 24 oder 25, dadurch gekennzeichnet, daß der Rest R der Formel G ein Alkylrest ist.

27. Ionenaustauscherharz nach einem der Ansprüche 24 bis 26, dadurch gekennzeichnet, daß der Rest R ein Wasserstoffatom ist.

28. Ionenaustauscherharz nach einem der Ansprüche 25 bis 27, dadurch gekennzeichnet, daß es durch das Verfahren nach dem Anspruch 30 erhalten wird.

29. Verfahren zur Synthese eines Ionenaustauscherharzes nach Anspruch 23, dadurch gekennzeichnet, daß es die folgenden Schritte umfaßt :

(1) Man säuert ein Harz, das Carboxylgruppen trägt, mit Hilfe einer Mineralsäure an,

(2) man spült das angesäuerte Harz, um die Mineralsäurespuren zu entfernen,

(3) man bringt das Harz auf einen zumindest dem azeotropen Destillieren mit Benzol entsprechenden Trockenheitsgrad,

(4) man läßt das getrocknete Harz mit Hilfe eines inerten Lösungsmittels aufblähen, das vorzugsweise wenigstens eine Etherbrücke aufweist und wenigstens 3 % seines Volumens an Wasser und wenigstens 8 % seines Volumens an Phosphortrichlorid lösen kann,

(5) man setzt dem aufgeblähten Harz 5 bis 50 % seines Volumens Wasser und Phosphortrichlorid in einem Verhältnis von 1 bis 2,5 Molen Wasser je Mol Phosphortrichlorid zu,

(6) man bringt die Temperatur während 0,5 bis 10 Stunden auf 90 bis 140 °C,

(7) man wiederholt die Vorgänge (5) und (6) wenistens einmal und vorzugsweise wenigstens zweimal unter evtl. Absenkung der Temperatur zwischen 20 und 80 °C vor jede neuer Zugabe,

(8) man spült mit Wasser und trocknet das Harz,

(9) man verestert evtl. das Harz in an sich bekannter Weise.

30. Verfahren nach Anspruch 29, dadurch gekennzeichnet, daß das Lösungsmittel im Schritt (4) aus der Gruppe gewählt wird, die aus Dioxan und Tetrahydrofuran gebildet ist.

31. Verwendung der Zusammensetzungen nach den Ansprüchen 1 bis 11 zur Wiedergewinnung des in Phosphorsäure enthaltenen Urans, dadurch gekennzeichnet, daß

(a) man die Phosphorsäure mit dieser Zusammensetzung in Kontakt bringt,

(b) man diese Zusammensetzung einer Reextraktion mit Hilfe von Reagenzien unterwirft, die aus der Gruppe gewählt sind, die aus den an sich für die Reextraktion von Octylpyrophosphorsäure bekannten basischen Reagenzien, den Alkalimetall- oder Ammoniumcarbonatlösungen in oxidierendem Medium und der Flußsäure gebildet ist.

32. Verwendung der Harze nach den Ansprüche 21 bis 28 zur Wiedergewinnung des in der Phosphorsäure enthaltenen Urans, dadurch gekennzeichnet, daß

(a) man die Phosphorsäure mit diesem Harz in Kontakt bringt,

(b) man dieses Harz einer Reextraktion mit Hilfe von Reagenzien unterwirft, die aus der Gruppe gewählt sind, die aus Ammonium- oder Alkalimetallcarbonaten und Eisen(III)-Sulfat gebildet ist.

33. Verwendung nach Anspruch 32, dadurch gekennzeichnet, daß dieses Reextraktionsreagenz des Schrittes (b) ein Ammonium- oder Alkalimetallcarbonat mit einer Konzentration im Bereich von 10 bis 200 g je Liter in oxidierendem Medium ist.